# EUROPEAN PATENT SPECIFICATION

(11) **EP 2 080 367 B1**
(45) Date of publication and mention of the grant of the patent: **27.02.2013**
(21) Application number: 07804074.8
(22) Date of filing: 30.08.2007
(51) Int. Cl.: H04N 5/272, H04N 5/445

(54) **DISPLAYING VIDEO**
VIDEO-ANZEIGE
AFFICHAGE VIDÉO

(30) Priority: 04.09.2006 GB 0617385; 05.09.2006 US 842222 P
(43) Date of publication of application: 22.07.2009
(73) Proprietor: NDS Limited, Staines, Middlesex TW18 4EX (GB)
(72) Inventor: COSTELLO, Michael, Middlesex TW18 3JE (GB); CORMICAN, Neil, London W14 8UH (GB); SHELTON, Ian, Hampshire BH24 1QX (GB)
(74) Representative: White, Duncan Rohan
(86) International application number: PCT/GB2007/003264
(87) International publication number: WO 2008/029086

(56) References cited:
- EP-A- 1 720 352
- EP-A1- 1 905 233
- WO-A-02/24289
- WO-A-98/31153
- WO-A-2007/009876
- US-A- 5 262 856
- US-A- 5 892 554
- US-A1- 2006 125 962
- US-B1- 6 556 775
- US-B1- 6 574 793

## Description

### FIELD OF THE INVENTION

This invention relates to a method of displaying video and a display device for rendering video for display.

### BACKGROUND TO THE INVENTION

Today, many set-top boxes (STBs) operating in broadcast networks have limited processing capabilities with respect to processing capabilities of, for example, dedicated game machines, such as the XBOX™, PlayStation™ 2 and GameCube™. Such limited processing capabilities limit the utilisation of interactive applications such as games. Since the ability to display and manipulate rich multimedia content is considered essential for many interactive applications, particularly interactive games, the limited processing capabilities of the STBs enable utilisation of only simple types of interactive applications and particularly simple types of games having uncomplicated or slow-changing backgrounds.

Published PCT application WO2004/072935 of NDS Limited (corresponding to US patent application S/N 10/543,765 also published as US 2006/0125962) describes an interactive system that provides a configuration with improved capabilities for handling interactive applications. An interactive method is described that comprises receiving, at a display device, background video including a multiplicity of video frames, at least one of the multiplicity of video frames including a plurality of sub-pictures, each of the plurality of sub-pictures representing an alternative background, and switching, at the display device, between a first sub-picture of the plurality of sub-pictures and a second sub-picture of the plurality of sub-pictures.

WO-A-2007/009876 discloses a method for overlaying two or more video streams dynamically, wherein metadata are associated to at least one of the video streams, comprising displaying a first video stream being one of said video streams, extracting the metadata, detecting that the extracted metadata define how to overlay the two or more video streams, and overlaying at least a second video stream to the first video stream as defined by said metadata.

US-A-5892554 discloses a live video insertion system efficiently places static or dynamic images into a live broadcast. The system initially identifies natural landmarks within the video scene that can be automatically identified and tracked as the field of view of the camera pans and rooms across the scene. The locations of the landmarks are mathematically modelled and stored as a constellation of locations on a mathematical grid. An arbitrary reference point, preferably not necessarily coincident with a selected natural landmark, is located within or without of the grid and used as an origin for the purpose of inserting the static or dynamic image within the field of view of the camera. For static images, it is frequently desirable to place an edge or border of the image to be inserted on the reference point For dynamic insertions, the distance between the reference point and the inserted dynamic image is automatically changed from frame to frame in order to make the image appear as though it's translating or changing, or both.

### BRIEF SUMMARY OF THE INVENTION

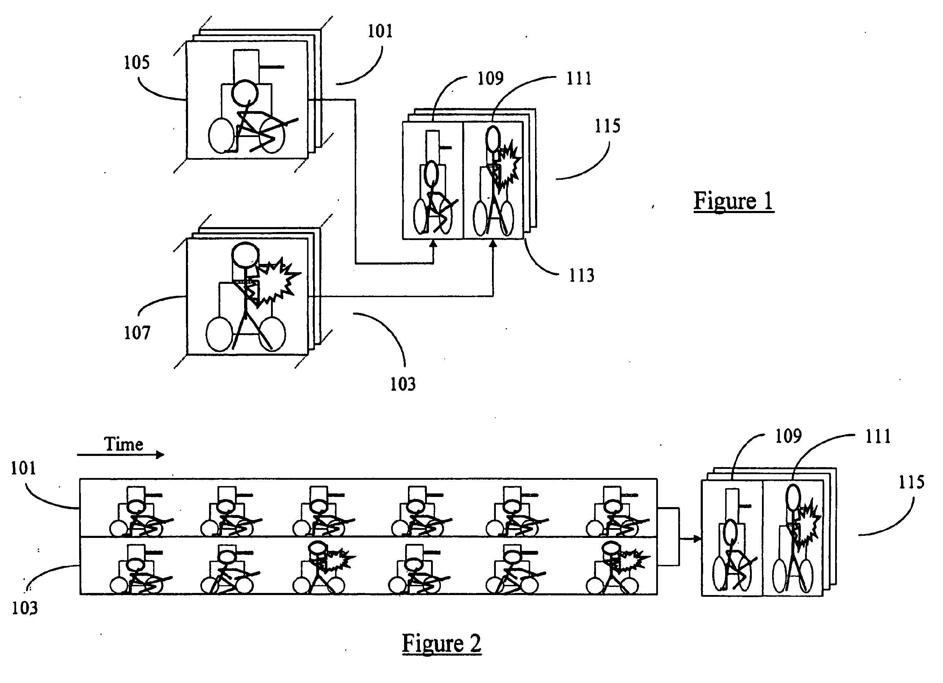

The method of the above mentioned published PCT and US applications and a particular example of using the method that has been devised by the inventors of the present invention are described in more detail below in the context of an interactive game application and witch reference to figures 1 and 2.

Referring first to figure 1, two independent video sequences 101/103, each comprising a multiplicity of video frames, are shown. Each frame is subject to a downscaling operation whereby the horizontal resolution of the frame is reduced by 50%. A background video frame is formed by 'stitching' together two "half-horizontal-resolution" video frames and therefore comprises two sub-pictures each of which represents an alternative background. This is shown in figure 1 where the horizontal resolution of frames 105 and 107 is reduced by 50% to form sub-pictures 109 and 111 and background video frame 113 is formed by stitching together the sub-pictures 109 and 111. A background video sequence 115 comprises a multiplicity of background video frames.

Referring now to figure 2, for the purpose of simple depiction only, video sequence 101 is shown on top of video sequence 103. Both the video sequences 101/103 (which are used to form background video sequence 115) can be seen to comprise a tank in the distance and a soldier in the foreground. Each video sequence is depicted as comprising a snapshot of six video frames. In video sequence 101 (the top sequence in figure 2), the soldier stays crouched throughout the duration of the video. In video sequence 103 (the bottom sequence in figure 2), the soldier is placed in exactly the same position in the first and fourth frames but in the second & third frames, and in the fifth and sixth frames, he is depicted as standing up and firing his gun. Sub-pictures 109 and 111 of background video frame 113 comprise downscaled versions of frames 105 and 107, which in figure 2 are the sixth frames of video sequences 101 and 103.

At a certain time during playing of this game application, the video may, for example, refer to the state in which the soldier is crouched behind the tank. In such a case, the sub-pictures within background video sequence 115 generated from video sequence 101 are upscaled to full horizontal resolution and displayed. The sub-pictures within background video sequence 115 generated from video sequence 103 are not displayed at this time.

As the game application proceeds, the video may need to change due to, for example, a user pressing a button on a remote control in order to make the soldier fire his gun. In such a case, a preferably seamless switch is made between the sub-pictures generated from video sequence 101 and the sub-pictures generated from video sequence 103 such that the sub-pictures within background video sequence 115 generated from video sequence 103 are upscaled in full horizontal resolution and displayed whilst the sub-pictures generated from video sequence 101 are not displayed. Thus, in response to a key press, a user is presented with video of the soldier standing up and firing his gun.

There are two problems associated with the above described interactive system.

Firstly, the above described technique relies on switching between sub-pictures at particular points in time in the video to effect a change and there is only a limited period of time where a switch can be made without the result looking wrong to a user. For example, whilst the soldier is crouching behind the tank, the switch can be made. Once the soldier begins to stand, the opportunity to switch ends. This is because switching from a crouching soldier to a standing soldier will make the soldier appear to instantly stand rather than rise gradually to his feet and the effect will look wrong to a user.

In the game application described above, if a user shoots an object, the user expects the soldier to stand up and fire his gun and therefore the application would switch to an alternative view of the scene at the point in time when the soldier begins to stand. If the alternative view is not at the point where the soldier begins to stand, the user would have to wait until the background video reached the correct point in time before the soldier would start to stand. Hence, the user might get an instant response sometimes but at other times the response may not be instantaneous therefore making game play frustrating.

Secondly, the initial downscaling performed to allow the background video frames to contain multiple sub-pictures removes half of the picture information such that when the sub-pictures are upscaled by the STB during gameplay, the picture appears 'soft' and slightly blurred. With the increasing availability and popularity of high definition display devices, broadcasts and applications, the resolution reduction and reduced picture quality might not be tolerated by users.

The invention is defined by the appended claims.

### BRIEF DESCRIPTION OF THE DRAWINGS

Embodiments of the present invention will now be described, by way of example only, with reference to the accompanying drawings, wherein like reference numbers refer to like parts, and in which:
Figure 1 is a pictorial representation of two video sequences comprising video frames and a third video sequence comprising frames including sub-pictures;
Figure 2 is a pictorial representation of two video sequences;
Figure 3 is a partly pictorial, partly block diagram illustration of an interactive system according to an embodiment of the present invention;
Figure 4 is a partly pictorial, partly block diagram illustration of an implementation of the interactive system of figure 3 and a broadcast source transmitting to the interactive system of figure 3;
Figure 5 is a pictorial representation of two video sequences comprising video frames according to embodiments of the present invention;
Figures 6a and 6b are screen shots that may be seen by a user using the interactive system of figure 3.

### DETAILED DESCRIPTION OF EMBODIMENT

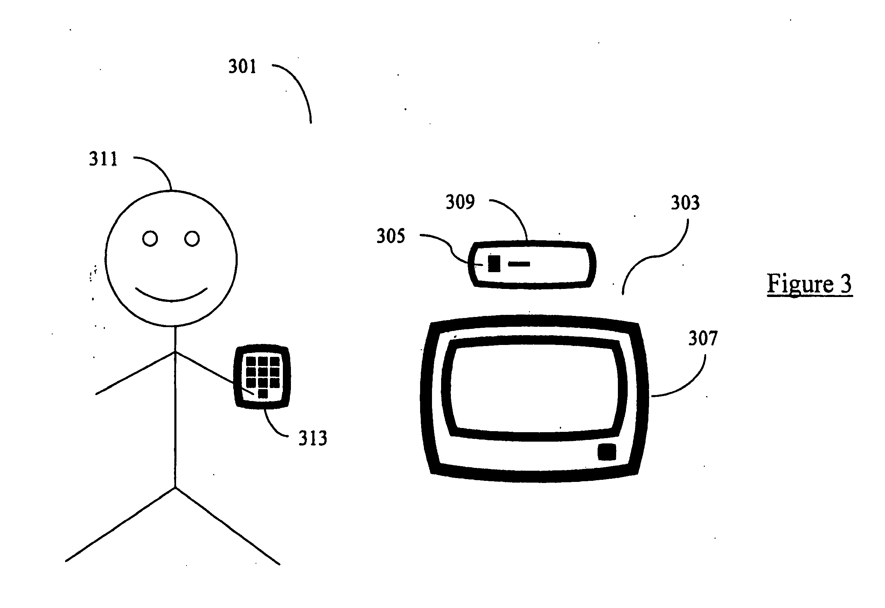

Reference is now made to figure 3, which is a simplified, partly pictorial, partly block diagram illustration of an interactive system 301, the interactive system 301 being constructed and operative in accordance with embodiments of the present invention. The interactive system 301 is shown in figure 1 utilising a first interactive application.

The interactive system 301 preferably provides to a user unit 303 (or a plurality of user units) at least one of the following: television programming including pay and/or non-pay television programming; multimedia information; an electronic program guide (EPG); audio programs; data; games; and information from computer based networks such as the Internet.

For simplicity of depiction and description, and without limiting the generality of the foregoing, only one user unit 303 is illustrated in figure 3 and referred to below. The user unit 303 includes a display device 305 and a display 307. The display 307 comprises any appropriate display such as a television or a computer monitor. The display device 305 is preferably comprised in a set-top box (STB) that is operatively associated with the display 307. Alternatively, the display device 305 comprises a cellular telephone (not shown) or any appropriate personal digital device capable of video reception and display (not shown), in which case the display 307 preferably comprises a display of the cellular telephone or a display of the personal digital device respectively.

By way of example, in figure 3 the display device 305 is depicted as comprising a STB 309 that is situated on top of the display 307 and the display 307 is depicted as comprising a television display. The STB 309 may, for example, additionally include conventional circuitry (not shown) for processing and displaying broadcast transmissions and a conventional access control device, such as a smart card (not shown) for allowing conditional access to at least a portion of the broadcast transmissions.

The user unit 303 is preferably operated by a user 311, for example via a remote control (RC) 313.

In operation, the user unit 303 receives programming material and information for displaying on the display 307. The programming material and the information are preferably broadcast to the user unit 303 as regular scheduled transmissions or in the form of video-on-demand (VOD) or near video-on-demand (NVOD) transmissions. Alternatively or additionally, the programming material and the information is preferably supplied by a personal video recorder (PVR) (not shown in figure 1), such as an XTV™ system, commercially available from NDS Limited, One Heathrow Boulevard, 286 Bath Road, West Drayton, Middlesex, UB7 0DQ, United Kingdom.

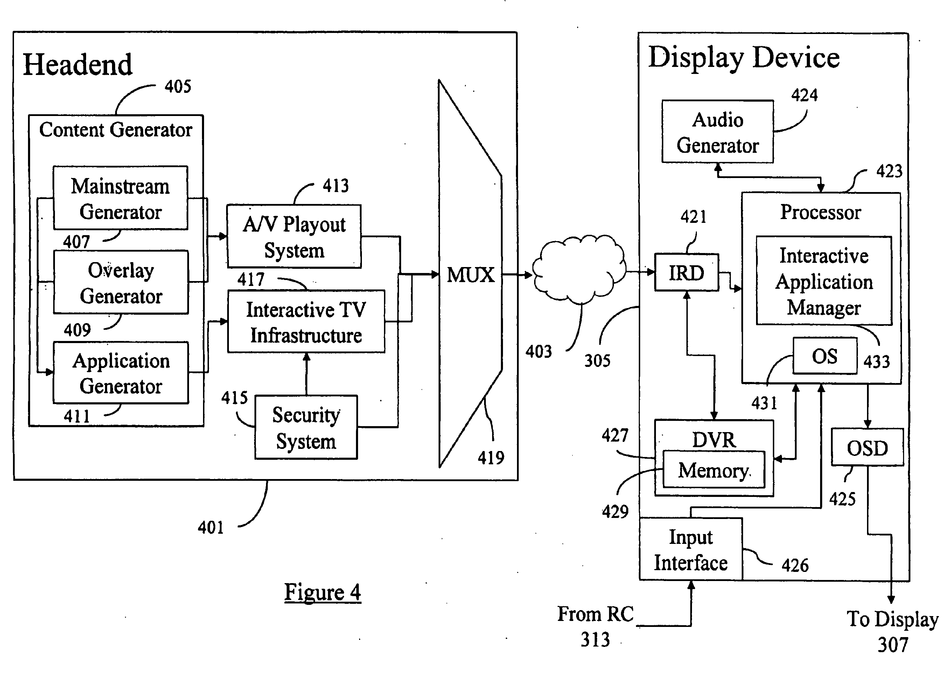

Reference is now made to figure 4 which is a simplified, partly pictorial, partly block diagram illustration of an implementation of the interactive system 301 of figure 3 and a broadcast source transmitting to interactive system 301.

The broadcast source preferably includes a headend 401 that communicates with the display device 305 (figure 1) via a one-way or two-way communication network 403 that includes at least one of the following: a satellite based communication network; a cable based communication network; a conventional terrestrial broadcast television network; a telephony based communication network; a telephony based television broadcast network; a mobile-telephony based television broadcast network; an Internet Protocol (IP) television broadcast network; and a computer based communication network. An example of an appropriate telephony or IP based television broadcast network includes, for example, a Synamedia™ system, commercially available from NDS Limited, One Heathrow Boulevard, 286 Bath Road, West Drayton, Middlesex, UB7 0DQ, United Kingdom.

It is appreciated that in alternative embodiments, the communication network 403 may, for example, be implemented by a one-way or two-way hybrid communication network, such as a combination cable-telephone network, a combination satellite-telephone network, a combination satellite-computer based communication network, or by any other appropriate network.

Physical links in the network 403 are preferably implemented via optical links, conventional telephone links, radio frequency (RF) wired or wireless links, or any other suitable links.

It is appreciated that the headend 401 may communicate with a plurality of display devices 305 of user units 303 (figure 3) via the communication network 403. Additionally or alternatively, a plurality of headends 401 may communicate with a single display device 305 or with a plurality of display devices 305 via the communication network 403. For simplicity of depiction and description, and without limiting the generality of the invention, only one display device 305 and a single broadcast source comprising the headend 401 are illustrated in figure 4 and referred to below as communicating via the network 403.

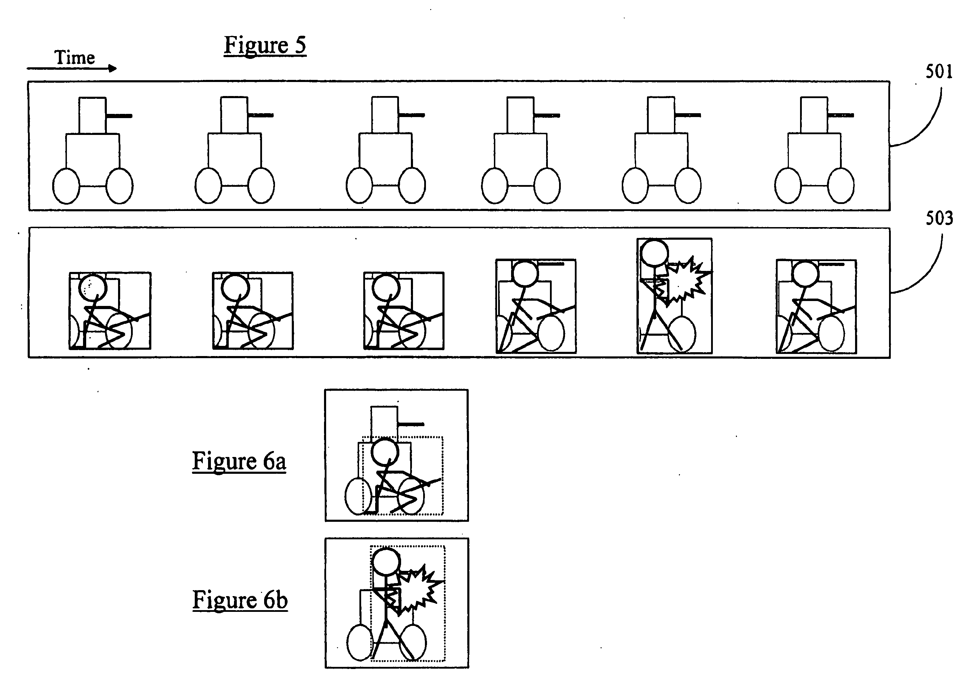

The headend 401 includes a content generator 405 that includes the following elements: a main sequence generator 407; an overlay sequence generator 409; and an application generator 411. The headend 401 also preferably includes the following elements: an audio/video (A/V) playout system 413; a security system 415; interactive television infrastructure 417; and a multiplexer (MUX) 419. The interactive television infrastructure 417 preferably includes conventional interactive television infrastructure such as, for example, the interactive television infrastructure Value@TV™, commercially available from NDS Limited of One London Road, Staines, Middlesex, TW18 4EX, United Kingdom, which is described at the World Wide Web site www.nds.com/interactive_tv/interactive_tv.html. Although not shown in figure 5, the headend 401 also preferably comprises a distinguishing information generator; an assistance information generator; an object generator; and a data/graphics inserter as described in Published PCT application WO2004/072935 of NDS Limited (corresponding to US patent application S/N 10/543,765 also published as US 2006/0125962).

Distinguishing information includes information that distinguishes portions of a main sequence or overlay video by at least one characteristic. Assistance information includes information related to main sequence and overlay video and audio that is used to create interactive elements enabling an interactive application to be carried out.

It is appreciated that the elements of the headend 401 may preferably be implemented in any appropriate combination of hardware and software.

The content generator 405 preferably provides video and audio content to the A/V playout system 413 that preferably provides the video and audio content in a format packaged for delivery via the MUX 419 to the network 403. The content generator 405 may specifically enable insertion, as required, of timing (T) information or private data into video and audio content for subsequent playout by the AN playout system 413.

The main sequence generator 407 and overlay generator 409 respectively provide main sequence and overlay video and audio for an interactive application, as well as timing information for the interactive application, to the A/V playout system 413. It is appreciated that in certain configurations of the headend 401, the main sequence generator 407 and overlay generator 409 may be comprised in the A/V playout system 413.

The A/V playout system 413 preferably includes standard studio equipment, such as a video server. Alternatively, and particularly in a case where the main sequence and overlay video and audio are dynamically changing, it may include a compressor and an Motion Picture Experts Group (MPEG) encoder, or a computer, such as a personal computer (PC), that runs a game application (Game Engine) and includes a graphics card capable of synthesizing in real time an output in a television (TV) format. The MPEG encoder preferably includes at least one of the following: an MPEG2 encoder; and an MPEG4 encoder.

The compressor preferably includes any appropriate compressor that compresses the main sequence and overlay video and audio in any appropriate digital A/V compression format which is supported by the display device 105 and is capable of carrying timing information, or private data containing timing information, attached to specific frames. Examples of appropriate compression products utilizing appropriate compression formats include Windows Media Player™, commercially available from Microsoft™ Corporation, and the Real compression products, commercially available from RealNetworks, Inc.

The application generator 411 preferably provides the interactive application and operating data regarding the interactive application to the infrastructure 417. The infrastructure 417 preferably applies security information received from the security system 415 to the interactive application and prepares the interactive application in a format suitable for transmission to the display device 105 via the network 403.

Referring back to figure 3, the timing information is preferably required for synchronization of the main sequence and overlay video and audio to the interactive application when the interactive application is executed by the display device 305. It is appreciated that conventional video sources typically provide video and audio in a synchronized form as is well known in the art and therefore it is sufficient to synchronize the interactive application to the main sequence and overlay video.

Synchronization of the main sequence and overlay video to the interactive application running in the display device 305 may be carried out in various ways. Preferably, the main sequence and overlay video is tagged with a reference that may be used by the interactive application to trigger an internal frame related event. If the interactive application comprises an interactive game application, the interactive game application must, for example, be able to lookup boundary information about the background and determine whether, for example, an object in the interactive application has drifted into a forbidden area on the display 307 (figure 3); that is every frame or every few frames the interactive game application must be able to determine which video frame is currently decoded for display on the display 307 and use a time reference to look up appropriate related boundary data.

The time reference may be obtained in various ways. For example, if the background video is compressed and MPEG encoded, such as by MPEG2 coding, an MPEG timecode as is well known in the art is typically embedded in a group of pictures (GOP) header and transmitted within an MPEG background video transmission. The timecode may then be extracted at the display device 305 to provide the time reference that is related to a current video frame.

It is appreciated that MPEG2 PCR (Program Clock Reference) and PTS (Presentation Time Stamp) can also be used to generate a timecode for each video frame. The PCR typically provides an overall clock reference for the interactive application and the PTS typically defines a presentation time of each video frame. By transmitting a PCR value of a known video frame, PTS offsets can be calculated and used to reference boundary data associated with a current background video frame. Such calculations are well known in the art of Digital Video Broadcasting (DVB) for calculation of Normal Play Time (NPT) as described, for example, in the above mentioned document ISO/IEC-13818-6, MPEG DSM-CC specifications, July 1999.

If the main sequence and overlay video comprises analogue video, the conventional vertical blanking interval (VBI) of a transmitted video signal may preferably be used to carry the time reference. It is appreciated that transport of VBI data is also typically provided in digital television systems to support features of an incumbent analogue video, and since the VBI data is frame related, the VBI data may be used to carry a frame reference from the headend 401 to the display device 305. It is appreciated that any VBI line may be used, but typically, VBI lines that are used for Vertical Interval Timecode or for Teletext lines are employed. Teletext supports private data carriage, and is therefore capable of transporting a data value representing a timecode for each frame.

For some systems, timing information may be sent out-of-band as part of data transmission. Such timing information is typically considered less accurate than, for example, timing information provided by any of the above mentioned MPEG timecode, MPEG PCR and PTS, and VBI data. However, implementation of out-of-band timing information transmission may be easier. It is appreciated that an inferior accuracy of the timing information in out-of-band timing information transmission may limit a type or complexity of interactive applications that may be used.

It is appreciated that the present invention is not limited by a way in which the time reference is obtained, and other appropriate ways may alternatively or additionally be used for obtaining the time reference.

It is appreciated that at least some of the information provided to the infrastructure 417 and the A/V playout system 413 may be encrypted in an encryptor (not shown) for access control, and the security information provided by the security system 415 may, for example, include entitlement control messages and control words for providing conditional access to the interactive application as is well known in the art. The infrastructure 417 and the A/V playout system 413 preferably output to the MUX 419 information for transmission to the display device 105 in a format packaged for delivery via the network 403.

It is appreciated that the security system 415 may also preferably protect at least part of the timing information before transmission to the display device 305 as described, for example, in published PCT application WO2005/071973 of NDS Limited (corresponding to US patent application S/N 10/584,887). Protection of the at least part of the timing information may, for example, be useful in preventing or making difficult removal of, skipping or otherwise tampering with advertising material by users where the advertising material is inserted in or associated with the interactive application.

The MUX 419 preferably multiplexes video, audio and data provided by the infrastructure 417 and the A/V playout system 413 and outputs multiplexed program transmissions for transmission to the display device 305 via the network 403. The program transmissions preferably include at least one of the following: television programming including pay and/or non-pay television programming; interactive television programming and applications such as, for example, interactive games and interactive gambling games; multimedia information; an EPG; audio programs; data; games; and information from computer based networks such as the Internet.

It is appreciated that non-A/V program transmissions may preferably be transmitted either as out-of-band transmissions, such as data carousel transmissions, or as in-band transmissions, such as in-video transmissions. Preferably, a transmission carousel as is well known in the art is used to transmit the package of data cyclically and continuously via the network 403 so that the package of data will be available to the display device 305 whenever the interactive application is available for execution at the display device 305. It is appreciated that the package of data may be packaged in any appropriate way, for example, as described in published PCT application WO2004/072935 of NDS Limited (corresponding to US patent application S/N 10/543,765 also published as US 2006/0125962).

It is appreciated that any appropriate hybrid in-video and data carousel transmission may alternatively be used.

Preferably, the multiplexed program transmissions are transmitted to the display device 305 via the network 403 and received at an integrated receiver and decoder (IRD) 421 in the display device 305. The IRD 421 preferably comprises a conventional IRD that receives, demultiplexes, decodes and decrypts/descrambles as necessary the multiplexed program transmissions under control of a conditional access device such as a removable security element (not shown) as is well known in the art. The removable security element may, for example, include a smart card (not shown) as is well known in the art.

In addition to the IRD 421, the display device 305 preferably includes a processor 423, such as, for example, an appropriate video processor as is well known in the art. The display device 305 preferably additionally includes an on-screen display (OSD) unit 425. Further additionally, the display device 305 preferably includes an audio generator 424 and an input interface 426.

The display device 305 preferably also includes, or is associated with, a digital video recorder (DVR) 427 that preferably includes a high capacity storage device 429, such as a high capacity memory. The DVR 427 is preferably operatively associated with the IRD 421 and the processor 423.

The IRD 421 preferably includes at least one audio decoder (not shown) and at least one video decoder (not shown). DVR 427 also preferably includes at least one audio decoder (not shown) and at least one video decoder (not shown). In alternative embodiments, DVR 427 uses an audio decoder and a video decoder comprised in the IRD 421, in which case the IRD 421 includes more than one audio decoder and more than one video decoder.

The display device 305 is preferably implemented in any appropriate combination of hardware and software. It is appreciated that at least some of the elements comprising display device 305 may be comprised in a single integrated circuit (IC).

DVR 427 preferably records at least some of the program transmissions received at the IRD 421 in the storage device 429 and displays recorded program transmissions at a discretion of user 311, at times selected by user 311, and in accordance with preferences of user 311 and parameters defined by user 311 as described, for example, in the published PCT Applications WO 00/01149 (corresponding to US patent application S/N 09/515,118), WO 01/52541 (corresponding to US patent application S/N 09/914,747 also published as US 2002/0138831) and WO 02/01866 (corresponding to US patent application S/N 10/297,453 also published as US 2003/0163832). DVR 427 also preferably enables various trick modes that may enhance viewing experience of users such as, for example, fast forward or fast backward as described, for example, in the published PCT Applications WO 03/010970 (corresponding to US patent application S/N 10/479,373 also published as US 2004/0199658) and WO 01/35669 (corresponding to US Patent Application S/N 09/574,096).

It is appreciated that the recorded program transmissions displayed by the DVR 427 typically comprise program transmissions delayed with respect to a time of broadcast of the program transmissions by the headend 401. Therefore, program transmissions that undergo decoding, and if necessary, decryption/descrambling at the IRD 421, preferably arrive either from broadcast transmissions broadcast by the headend 401 or from the storage device 429 of the DVR 427. The program transmissions may, for example, be broadcast by the headend 401 as regular scheduled transmissions or in the form of VOD or NVOD transmissions. The program transmissions that are decoded and decrypted/descrambled by the IRD 421 typically require processing of a similar type whether provided by the headend 401 or by the DVR 427, or by any other appropriate device in which the program transmissions may be stored, such as a game console or a cellular telephone.

The processor 423 preferably includes an operating system 431 that enables processing of the program transmissions. The processor 423 also preferably includes an interactive application manager 433 for managing, processing and displaying of interactive applications provided in the program transmissions.

The input interface 425 preferably accepts user input from an input device such as the RC 313 (figure 3) that is operated by the user 311. The user input is preferably provided to the processor 423 as instructions and an interactive input for the interactive applications provided in the program transmissions.

The operation of the interactive system 301 of figures 3 and 4 is now briefly described with reference to, for example and without limiting the generality of the present invention, interactive game applications.

Preferably, a second interactive game application that enables playing a game is prepared at the headend 401 for transmission to the display device 305. Preparation of the second interactive game application preferably depends upon a type of the interactive game application. In the present embodiment, the preparation of the second interactive game application includes preparation of game information including: main sequence video comprising a multiplicity of main sequence video frames and overlay video comprising a multiplicity of overlay video frames. The overlay video may be any size depending on the second interactive game application. The overlay video frames contain elements of the main sequence video frames such that when the overlay video frames are displayed on top of the main sequence video frames, a user is unable to tell that an overlay video sequence is being used.

The preparation of the second interactive game application may also include preparation of other game information including: assistance information, object information that comprises information determining an object, and distinguishing information - all as described in the above mentioned published PCT application WO2004/072935; and also main sequence and overlay audio.

The prepared game information is multiplexed in the MUX 419 and transmitted to the display device 305 in association with the second interactive game application. It is appreciated that the prepared game information may be transmitted as at least one of the following: in-video information; data carousel information; and a combination of in-band and out-of-band information.

At the display device 305, the IRD 421 preferably receives the second interactive game application and the prepared game information and provides the second interactive game application and the prepared game information to the processor 423, if the second interactive game application is to be executed in real-time. If the second interactive game application is to be stored for execution at a time after broadcast time of the second interactive game application, the IRD 421 preferably provides the second interactive game application and the prepared game information to the DVR 427 for storage in the storage device 429. It is appreciated that in a case where the second interactive game application and the prepared game information are stored in the storage device 429 of the DVR 427, the second interactive game application and the prepared game information may later be retrieved from the DVR 427 for processing by the processor 423 in response to at least one of the following: an input of a user, such as user 311; timing information; an instruction from the headend 401; and an instruction embedded in the second interactive game application.

When the second interactive game application is to be executed at the display device 105, the second interactive game application and the prepared game information are preferably provided to the processor 423. The processor 423, operated by the operating system 431 in association with the interactive application manager 433, preferably loads up some or all of the assistance information, the distinguishing information and the object information into an internal memory (not shown) thus making the assistance information, the distinguishing information and the object information ready for association with the main sequence and overlay video and audio as necessary for playing the game.

As the main sequence and overlay video and audio are received at the display device 305, the processor 423 preferably extracts timing information related to the interactive game application and uses the timing information to lookup into the assistance information, the distinguishing information and the object information as necessary in order to synchronize the main sequence and overlay video to the second interactive game application. The processor 423 then preferably processes the second interactive game application using the prepared game information, and renders the processed second interactive game application for displaying on the display 307. The processor 423 may be assisted by the audio generator 424 for generation of audio to be rendered. It is appreciated that execution of the second interactive game application typically proceeds according to user input received from the user 311 via the input interface 426 of the display device 305.

Preparation of the second interactive game application at the headend 401 in the manner described herein preferably reduces processing power required of the processor 423. Thus, various interactive games with various levels of complexity may be played via the display device 305 even if the processing power of the processor 423 is relatively low.

In the second interactive game application, the IRD 423 of the display device 305 receives two independent video sequences - main video sequence comprising a multiplicity of video frames and overlay video sequence comprising a multiplicity of video frames - from broadcast transmissions provided by the headend 401 or from program material stored in the storage device 429 of the DVR 427.

Referring now to figure 5, for simplicity of depiction and description, and without limiting the generality of the foregoing, main sequence video 501 and overlay video sequence 503 are each depicted as comprising a snapshot of six video frames.

In the present embodiment, main video sequence 501 comprises a sequence of full resolution video frames each comprising a tank in the background of the video frame.

In the present embodiment, overlay video sequence 503 comprises a sequence of video frames, each video frame comprising a rectangular object region of varying sizes (resolution), each rectangular object region comprising a soldier in the foreground and a tank in the background. The position of the soldier and the amount of tank that is visible in each overlay flame varies. For example, in the first three overlay frames, the soldier remains crouched behind the tank and the turret of the tank is hardly visible. In the fourth, fifth and sixth overlay frames, the soldier is depicted respectively as beginning to standing up, standing and firing his gun and beginning to crouch down and more of the turret of the tank is visible.

The overlay video frames contain elements of the mainvideo frames such that when the overlay video frames are displayed on top of the main video frames, a user is unable to tell that an overlay video sequence is being used. This is depicted in figures 6a and 6b, which depicts screen views seen by a user and in which the first (figure 6a) and sixth (figure 6b) overlay frames are displayed on top of a mainstream video frame. The dotted lines surrounding the overlay frames are for the purpose of depiction only and could not be visible to the user. The user would be unable to tell that an overlay video sequence is being displayed on top of a main video sequence.

Referring once again to figure 4, it will be remembered that processor 423 preferably processes the second interactive game application using the prepared game information, and renders the processed second interactive game application for displaying on the display 307. In the present embodiment, this comprises rendering the main video sequence 501 for displaying on display 307 and rendering a first portion of overlay video sequence 503 for displaying one display 307 on top of the main video sequence 501. In the present embodiment, the first portion of the overlay video sequence 503 that is rendered for displaying over the main video sequence 501 is the portion that starts with the first video frame shown in figure 5 and ends with the third video frame shown in figure 5. This first portion of the overlay video sequence 503 is repeatedly rendered for display on top of the rendered main video sequence 501 thus giving the appearance of the soldier remaining crouched behind the tank as shown in figure 6a.

As the second game application proceeds, the video may need to change due to, for example, the user 311 pressing a button on RC 313 in order to make the soldier fire his gun. When this occurs, processor 423 renders a second portion of the overlay video sequence 503 for displaying on display 307. The second portion of the overlay video sequence 503 is the portion that starts with the fourth video frame shown in figure 5 and ends with the sixth video frame shown in figure 5. Once this second portion of the overlay video sequence 503 has been rendered for display on top of the rendered main video sequence 501, processor 423 once again renders the first portion of overlay video sequence 503 for displaying on top of the rendered main video sequence 501. This gives the appearance the soldier rising from a crouching position to a standing position, firing his gun and returning to a crouching position.

Since neither the main video sequence 501 nor the overlay video sequence 503 are initially downscaled, the problem described above in relation to the prior art with respect to high definition broadcasting is obviated and preferably, both main video sequence 501 and overlay video sequence 503 comprise high definition broadcast sequence resulting in a significant enhancement to the graphical appeal of games and other interactive applications and broadcasts.

Furthermore, the overlay video sequence 503 can be controlled independently of main video sequence 501 and a different portion of the overlay video sequence 503 can be rendered for display at any time without the result looking strange to a user. Put another way, there is no need to wait until a specific point in the main video sequence is reached before rendering a different portion of the overlay video sequence. Thus the problem of a user getting an instant response sometimes and non-instant response at other times is removed.

It will be apparent from the foregoing description that many modifications or variations may be made to the above described embodiments without departing from the invention. Such modifications and variations include:

In the above described embodiments, the preparation of the second interactive game application at the headend 401 included preparation of game information including the main video sequence and the overlay video sequence. The prepared game information was then multiplexed in the MUX 419 and transmitted to the display device 305. In alternative embodiments, the main video sequence and overlay video sequence may be prepared at the headend 401 at different times and/or transmitted to the display device 305 separately. For example, the main video sequence may be prepared, transmitted to the display device 305 an stored in memory 429 of personal video recorder 427 with the overlay video sequence only being prepared and transmitted when processor 423 begins to process the associated application.

In the above described embodiments, each overlay video frame comprised a rectangular object region of varying size. In alternative embodiments, overlay video frames may comprise "non-rectangular" object regions. In such embodiments, each pixel in an overlay video frame is preferably defined in a colour space that includes an alpha component, e.g. RGBA or YUVA. The alpha component is the opacity component. If a pixel has an alpha component value of 0%, it is fully transparent (and thus invisible), whereas an alpha component value of 100% gives a fully opaque pixel. In this way, arbitrarily shaped video frames can be defined.

In such embodiments, when overlaid on top of the main video sequence, the overlay video sequence may substantially cover the main video sequence rendering it invisible (i.e. the majority of the overlay video pixels have their alpha component value set to 100%), save for a region of overlay video pixels having an alpha component value set closer to 0%. This would give the effect of a hole through which a user can view the main video sequence. The hole could be controlled by the processor 423 executing the application by making suitable choices for the alpha component values at each pixel. For example, in an interactive game application, the hole could be used to provide a different view of a scene such as one obtained when viewing the scene through night-vision sight equipment.

In the above described embodiment, each overlay video frame comprised an object region. In alternative embodiments, overlay video frames may comprise multiple object regions. In some embodiments this may be achieved using per-pixel alpha components as described above. In other embodiments, there may be one or more further overlay video sequence, each of which is overlaid on top of main video sequence 501. It will be appreciated that the number of audio and video decoders in display device 105 is dependent on the number of video sequence that comprise the displayed video. For example, scenes could be built up using several video layers that each act independently of each other - a scene consisting of a foreground, midground and background may be built up from a main video sequence providing the background and two overlay video sequences providing the midground and foreground.

In the above described embodiments, the main video sequence and overlay video sequence were related to an interactive game application. In an alternative embodiment, the main video sequence could comprise the background to a television advertisement with the overlay video sequence comprising the product to be advertised. In this way, one advertisement background could be used for advertising a plurality of different products. For example, in an advertisement for a car, different sections of the overlay video sequence might be provided each of which showing a differently coloured car. As a further example, in an advertisement for bottled water, different sections of the overlay video sequence might be provided each of which showing the bottled water with a label suitable for the market region where the water is advertised. As yet a further example, in a television programme, different products and/or different brands of the same product could be placed on a table by having different sections of overlay video sequence each showing the different product and/or different brand of the same product and overlaying the relevant section of overlay video sequence on top of the main video sequence.

In some embodiments, at least one of the overlay video frames comprises a plurality of sub-frames. For example, one overlay frame may comprise four sub-frames each having a resolution equal to one quarter the resolution of a mainstream frame. In relation to the above described bottled water advertising embodiment, each sub-frame could comprise an image of different bottled water. A particular sub-frame could then be chosen to be overlaid on top of the main video sequence depending on which bottled water is to be advertised.

The overlay video sequence has thus far been described as a separate video sequence, independent of the main video sequence. In alternative embodiments, part of the main video sequence could be 'hijacked' with the overlay video sequence being hidden in the 'hijacked' portion of the main video sequence. For example, if the main video sequence had a resolution of 1280x720 pixels, the final 80 horizontal pixels could be given over to the overlay video data resulting in a main video sequence having a resolution of 1200x720 and an overlay video sequence having a resolution of 80x720. This is advantageous since only one encoder at the headend and one decoder at the display device would be needed. In these embodiments, the 1200x720 resolution main video sequence is preferably upscaled to a resolution of 1280x720 pixels. Since such a small proportion of pixels are removed from the original main video sequence, this upscaling is unlikely to detract from the user experience. Alternatively, the 1200x720 resolution main video sequence could be cropped and centred before being displayed so that when it is displayed, it appears with two 'black' areas of 40 pixels down each side of the display. Once again, this is unlikely to detract from the user experience

In an alternative embodiment, a main video sequence might be accompanied by a sign-language overlay video sequence. In this way, the person signing could be made to blend in better with the main video sequence than was hitherto possible. Moreover, if the sign-language overlay video sequence had a resolution equal to 1/16^{th} of the main video sequence resolution, a sign-language overlay video sequence could comprising sixteen sub-frames could carry sixteen different sign-language versions.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable sub-combination.

It will be appreciated by persons skilled in the art that the present invention is not limited by what has been particularly shown and described hereinabove. Rather the scope of the invention is defined only by the claims which follow.

## Claims

1. A method of generating and displaying video, said method comprising:
generating a main video stream (501) comprising a plurality of full resolution video frames;
generating an overlay video (503), said overlay video (503) comprising a first portion and a second portion, each portion comprising a sequence of video frames; wherein said first portion and said second portion contain elements appearing in said main video stream (501);
receiving said main video stream (501) and said overlay video (503) at a display device;
displaying said video on a display (307) by:
rendering said main video stream (501);
rendering said first portion of said overlay video (503) over said main video stream such that when said video is displayed said video has the appearance of being rendered as a single video;
switching between said first portion of said overlay video (503) and said second portion of said overlay video (503) whilst continuing to render said main video stream (501) and without waiting until a specific point in the main video sequence is reached; and
rendering said second portion of said overlay video (503) over said main video stream (501) such that when said video is displayed said video has the appearance of being rendered as a single video.

2. A method according to any preceding claim, wherein said main video stream (501) and said overlay video (503) comprise independent video sequences.

3. A method according to any preceding claim, wherein said rendering comprises repeatedly rendering said first portion of said overlay video (503) before switching between said first portion of said overlay video (503) and said second portion of said overlay video (503).

4. A method according to any preceding claim, said method further comprising:
receiving an additional overlay video, said additional overlay video comprising first and second additional portions; and
rendering said first additional portion of said additional overlay video over said main video stream (501),
wherein said first additional portion contains elements appearing in said main video stream (501) such that when said video is displayed, said video has the appearance of being rendered as a single video.

5. A method according to claim 4, said method further comprising:
switching between said first additional portion of said additional overlay video and said second additional portion of said additional overlay video; and
rendering said second additional portion of said additional overlay video over said main video stream (501),
wherein said second additional portion contains elements appearing in said main video stream (501) such that when said video is displayed, said video has the appearance of being rendered as a single video.

6. A method according to any preceding claim, wherein said switching comprises switching in response to at least one of the following: timing information; user input; an instruction from a headend; an instruction from a broadcast source; and an instruction from an interactive application.

7. A method according to any preceding claim, wherein receiving said main video stream (501) and/or said overlay video (503) comprises receiving said main video stream (501) and/or said overlay video (503) from one of the following: a broadcast source; and a storage device of a digital video recorder.

8. A method according to any of claims 4 or 5, wherein receiving said additional overlay video comprises receiving said additional overlay video from one of the following: a broadcast source; and a storage device of a digital video recorder.

9. A method according to any preceding claim, wherein rendering said first portion comprises rendering said first portion of said overlay video (503) over said main video stream (501) such that one or more boundaries between said main video stream (501) and said first portion of said overlay video (503) are not noticeable by a viewer; and wherein rendering said second portion comprises rendering said second portion of said overlay video (503) over said main video stream (501) such that one or more boundaries between said main video stream (501) and said second portion of said overlay video (503) are not noticeable by said viewer.

10. A system comprising a content generator (405) and a display device operable to render video for display on a display (307), said content generator (405) comprising:
main video stream generating means (407) for generating a main video stream (501) comprising a plurality of full resolution video frames; and
overlay video generating means (409) for generating an overlay video (503), said overlay video (503) comprising a first portion and a second portion, each portion comprising a sequence of video frames; wherein said first portion and said second portion contain elements appearing in said main video stream (501);
said display device comprising:
main video stream receiving means (421) for receiving said main video stream (501);
overlay video receiving means (421) for receiving said overlay video (503); and
video display means (425) for displaying said video on said display (307) by:
rendering said main video stream (501);
rendering said first portion of said overlay video (503) over said main video stream (501) such that when said video is displayed, said video has the appearance of being rendered as a single video;
switching between said first portion of said overlay video (503) and said second portion of said overlay video (503) whilst continuing to render said main video stream (501) and without waiting until a specific point in the main video sequence is reached; and
rendering said second portion of said overlay video (503) over said main video stream (501) such that when said video is displayed, said video has the appearance of being rendered as a single video.

11. A computer program comprising computer program code means adapted to perform all the steps of any of claims 1 to 9 when said program is run on a computer.

12. A computer program as claimed in claim 11 embodied on a computer readable medium.

## Patentansprüche

1. Verfahren zur Video-Generierung und -Anzeige, das Verfahren umfassend:
Generieren eines Hauptvideostroms (501), der eine Vielzahl von Videorahmen voller Auflösung umfasst;
Generieren eines Überlagerungsvideos (503), wobei das Überlagerungsvideo (503) einen ersten Abschnitt und einen zweiten Abschnitt umfasst, wobei jeder Abschnitt eine Abfolge von Videorahmen umfasst; wobei der erste Abschnitt und der zweite Abschnitt Elemente enthalten, die in dem Hauptvideostrom (501) erscheinen;
Empfangen des Hauptvideostroms (501) und des Überlagerungsvideos (503) an einer Anzeigevorrichtung;
Anzeigen des Videos auf einer Anzeige (307) durch:
Wiedergeben des Hauptvideostroms (501);
Wiedergeben des ersten Abschnitts des Überlagerungsvideos (503) über dem Hauptvideostrom, so dass, wenn das Video angezeigt wird, das Video das Erscheinen hat, als ein einzelnes Video wiedergegeben zu werden;
Umschalten zwischen dem ersten Abschnitt des Überlagerungsvideos (503) und dem zweiten Abschnitt des Überlagerungsvideos (503), während die Wiedergabe des Hauptvideostroms (501) fortgesetzt wird, und ohne zu warten, bis ein bestimmter Punkt in der Hauptvideoabfolge erreicht ist; und
Wiedergeben des zweiten Abschnitts des Überlagerungsvideos (503) über dem Hauptvideostrom (501), so dass, wenn das Video angezeigt wird, das Video das Erscheinen hat, als ein einzelnes Video wiedergegeben zu werden.

2. Verfahren nach einem der vorstehenden Ansprüche, wobei der Hauptvideostrom (501) und das Überlagerungsvideo (503) unabhängige Videoabfolgen umfassen.

3. Verfahren nach einem der vorstehenden Ansprüche, wobei das Wiedergeben umfasst, den ersten Abschnitt des Überlagerungsvideos (503) wiederholt wiederzugeben, bevor zwischen dem ersten Abschnitt des Überlagerungsvideos (503) und dem zweiten Abschnitt des Überlagerungsvideos (503) umgeschaltet wird.

4. Verfahren nach einem der vorstehenden Ansprüche, das Verfahren weiter umfassend:
Empfangen eines zusätzlichen Überlagerungsvideos, wobei das zusätzliche Überlagerungsvideo einen ersten und einen zweiten zusätzlichen Abschnitt umfasst; und
Wiedergeben des ersten zusätzlichen Abschnitts des zusätzlichen Überlagerungsvideos über dem Hauptvideostrom (501),
wobei der erste zusätzliche Abschnitt Elemente enthält, die in dem Hauptvideostrom (501) erscheinen, so dass, wenn das Video angezeigt wird, das Video das Erscheinen hat, als ein einzelnes Video wiedergegeben zu werden.

5. Verfahren nach Anspruch 4, das Verfahren weiter umfassend:
Umschalten zwischen dem ersten zusätzlichen Abschnitt des zusätzlichen Überlagerungsvideos und dem zweiten zusätzlichen Abschnitt des zusätzlichen Überlagerungsvideos; und
Wiedergeben des zweiten zusätzlichen Abschnitts des zusätzlichen Überlagerungsvideos über dem Hauptvideostrom (501),
wobei der zweite zusätzliche Abschnitt Elemente enthält, die in dem Hauptvideostrom (501) erscheinen, so dass, wenn das Video angezeigt wird, das Video das Erscheinen hat, als ein einzelnes Video wiedergegeben zu werden.

6. Verfahren nach einem der vorstehenden Ansprüche, wobei das Umschalten umfasst, als Reaktion auf mindestens eines des Folgenden umzuschalten:
Taktungsinformationen; Benutzereingabe; eine Anweisung von einer Kopfstelle; eine Anweisung von einer Rundfunkquelle; und eine Anweisung von einer interaktiven Anwendung.

7. Verfahren nach einem der vorstehenden Ansprüche, wobei Empfangen des Hauptvideostroms (501) und/oder des Überlagerungsvideos (503) umfasst, den Hauptvideostrom (501) und/oder das Überlagerungsvideo (503) von einem der Folgenden zu empfangen: eine Rundfunkquelle; und eine Speichervorrichtung eines Digitalvideorecorders.

8. Verfahren nach einem der Ansprüche 4 oder 5, wobei Empfangen des zusätzlichen Überlagerungsvideos umfasst, das zusätzliche Überlagerungsvideo von einem der Folgenden zu empfangen: eine Rundfunkquelle; und eine Speichervorrichtung eines Digitalvideorecorders.

9. Verfahren nach einem der vorstehenden Ansprüche, wobei Wiedergeben des ersten Abschnitts umfasst, den ersten Abschnitt des Überlagerungsvideos (503) über dem Hauptvideostrom (501) derart wiederzugeben, dass eine oder mehrere Grenzen zwischen dem Hauptvideostrom (501) und dem ersten Abschnitt des Überlagerungsvideos (503) von einem Betrachter nicht wahrnehmbar sind; und wobei Wiedergeben des zweiten Abschnitts umfasst, den zweiten Abschnitt des Überlagerungsvideos (503) über dem Hauptvideostrom (501) derart wiederzugeben, dass eine oder mehrere Grenzen zwischen dem Hauptvideostrom (501) und dem zweiten Abschnitt des Überlagerungsvideos (503) von dem Betrachter nicht wahrnehmbar sind.

10. System umfassend einen Inhaltsgenerator (405) und eine Anzeigevorrichtung, die funktionsfähig ist, um Video zur Anzeige auf einer Anzeige (307) wiederzugeben, der Inhaltsgenerator umfassend:
Hauptvideostrom-Generiermittel (407) zum Generieren eines Hauptvideostroms (501) umfassend eine Vielzahl von Videorahmen voller Auflösung; und
Überlagerungsvideo-Generiermittel (409) zum Generieren eines Überlagerungsvideos (503), wobei das Überlagerungsvideo (503) einen ersten Abschnitt und einen zweiten Abschnitt umfasst, wobei jeder Abschnitt eine Abfolge von Videorahmen umfasst; wobei der erste Abschnitt und der zweite Abschnitt Elemente enthalten, die in dem Hauptvideostrom (501) erscheinen;
wobei die Anzeigevorrichtung umfasst:
Hauptvideostrom-Empfangsmittel (421) zum Empfangen des Hauptvideostroms (501);
Überlagerungsvideo-Empfangsmittel (421) zum Empfangen des Überlagerungsvideos (503); und
Video-Anzeige-Mittel (425) zum Anzeigen des Videos auf der Anzeige (307) durch:
Wiedergeben des Hauptvideostroms (501);
Wiedergeben des ersten Abschnitts des Überlagerungsvideos (503) über dem Hauptvideostrom (501), so dass, wenn das Video angezeigt wird, das Video das Erscheinen hat, als ein einzelnes Video wiedergegeben zu werden;
Umschalten zwischen dem ersten Abschnitt des Überlagerungsvideos (503) und dem zweiten Abschnitt des Überlagerungsvideos (503), während die Wiedergabe des Hauptvideostroms (501) fortgesetzt wird, und ohne zu warten, bis ein bestimmter Punkt in der Hauptvideoabfolge erreicht ist; und
Wiedergeben des zweiten Abschnitts des Überlagerungsvideos (503) über dem Hauptvideostrom (501), so dass, wenn das Video angezeigt wird, das Video das Erscheinen hat, als ein einzelnes Video wiedergegeben zu werden.

11. Computerprogramm, umfassend Computerprogrammcode-Mittel, die angepasst sind, um alle Schritte nach einem der Ansprüche 1 bis 9 durchzuführen, wenn das Programm auf einem Computer ausgeführt wird.

12. Computerprogramm nach Anspruch 11, verkörpert auf einem computerlesbaren Medium.

## Revendications

1. Procédé de génération et d'affichage vidéo, ledit procédé consistant à :
générer un flux vidéo principal (501) comprenant une pluralité d'images vidéo pleine résolution ;
générer une vidéo de superposition (503), ladite vidéo de superposition (503) comprenant une première partie et une seconde partie, chaque partie comprenant une séquence d'images vidéo ; dans lequel ladite première partie et ladite seconde partie contiennent des éléments apparaissant dans ledit flux vidéo principal (501) ;
recevoir ledit flux vidéo principal (501) et ladite vidéo de superposition (503) au niveau d'un dispositif d'affichage;
afficher ladite vidéo sur un affichage (307) :
en restituant ledit flux vidéo principal (501) ;
en restituant ladite première partie de ladite vidéo de superposition (503) sur ledit flux vidéo principal de telle sorte que lorsque ladite vidéo s'affiche, ladite vidéo apparaît comme étant restituée sous la forme d'une vidéo unique ;
en commutant entre ladite première partie de ladite vidéo de superposition (503) et ladite seconde partie de ladite vidéo de superposition (503) tout en continuant à restituer ledit flux vidéo principal (501) et sans attendre jusqu'à ce qu'un point spécifique de la séquence vidéo principale soit atteint ; et
en restituant ladite seconde partie de ladite vidéo de superposition (503) sur ledit flux vidéo principal (501) de telle sorte que lorsque ladite vidéo s'affiche, ladite vidéo apparaît comme étant restituée sous la forme d'une vidéo unique.

2. Procédé selon l'une quelconque des revendications précédentes, dans lequel ledit flux vidéo principal (501) et ladite vidéo de superposition (503) comprennent des séquences vidéo indépendantes.

3. Procédé selon l'une quelconque des revendications précédentes, dans lequel ladite restitution consiste à restituer de manière répétée ladite première partie de ladite vidéo de superposition (503) avant de commuter entre ladite première partie de ladite vidéo de superposition (503) et ladite seconde partie de ladite vidéo de superposition (503).

4. Procédé selon l'une quelconque des revendications précédentes, ledit procédé consistant en outre à :
recevoir une vidéo de superposition supplémentaire, ladite vidéo de superposition supplémentaire comprenant des première et seconde parties supplémentaires ; et
restituer ladite première partie supplémentaire de ladite vidéo de superposition supplémentaire sur ledit flux vidéo principal (501),
dans lequel ladite première partie supplémentaire contient des éléments apparaissant dans ledit flux vidéo principal (501) de telle sorte que lorsque ladite vidéo s'affiche, ladite vidéo apparaît comme étant restituée sous la forme d'une vidéo unique.

5. Procédé selon la revendication 4, ledit procédé consistant en outre à :
commuter entre ladite première partie supplémentaire de ladite vidéo de superposition supplémentaire et ladite seconde partie supplémentaire de ladite vidéo de superposition supplémentaire ; et
restituer ladite seconde partie supplémentaire de ladite vidéo de superposition supplémentaire sur ledit flux vidéo principal (501),
dans lequel ladite seconde partie supplémentaire contient des éléments apparaissant dans ledit flux vidéo principal (501) de telle sorte que lorsque ladite vidéo s'affiche, ladite vidéo apparaît comme étant restituée sous la forme d'une vidéo unique.

6. Procédé selon l'une quelconque des revendications précédentes, dans lequel ladite commutation consiste à commuter en réponse à au moins l'un des éléments suivants : des informations de rythme ; une entrée utilisateur ; une instruction provenant d'une tête de réseau ; une instruction provenant d'une source de diffusion ; et une instruction provenant d'une application interactive.

7. Procédé selon l'une quelconque des revendications précédentes, dans lequel la réception dudit flux vidéo principal (501) et/ou de ladite vidéo de superposition (503) consiste à recevoir ledit flux vidéo principal (501) et/ou ladite vidéo de superposition (503) de l'un des éléments suivants : une source de diffusion et un dispositif de stockage d'un enregistreur vidéo numérique.

8. Procédé selon l'une quelconque des revendications 4 ou 5, dans lequel la réception de ladite vidéo de superposition supplémentaire consiste à recevoir ladite vidéo de superposition supplémentaire de l'un des éléments suivants : une source de diffusion et un dispositif de stockage d'un enregistreur vidéo numérique.

9. Procédé selon l'une quelconque des revendications précédentes, dans lequel la restitution de ladite première partie consiste à restituer ladite première partie de ladite vidéo de superposition (503) sur ledit flux vidéo principal (501) de telle sorte qu'une ou plusieurs délimitations entre ledit flux vidéo principal (501) et ladite première partie de ladite vidéo de superposition (503) ne soient pas perceptibles par un spectateur ; et dans lequel la restitution de la seconde partie consiste à restituer ladite seconde partie de ladite vidéo de superposition (503) sur ledit flux vidéo principal (501) de telle sorte qu'une ou plusieurs délimitations entre ledit flux vidéo principal (501) et ladite seconde partie de ladite vidéo de superposition (503) ne soient pas perceptibles par ledit spectateur.

10. Système comprenant un générateur de contenu (405) et un dispositif d'affichage conçu pour restituer une vidéo pour affichage sur un affichage (307), ledit générateur de contenu (405) comprenant :
des moyens de génération de flux vidéo principal (407) pour générer un flux vidéo principal (501) comprenant une pluralité d'images vidéo pleine résolution ; et
des moyens de génération de vidéo de superposition (409) pour générer une vidéo de superposition (503), ladite vidéo de superposition (503) comprenant une première partie et une seconde partie, chaque partie comprenant une séquence d'images vidéo ; dans lequel ladite première partie et ladite seconde partie contiennent des éléments apparaissant dans ledit flux vidéo principal (501) ;
ledit dispositif d'affichage comprenant:
des moyens de réception du flux vidéo principal (421) pour recevoir ledit flux vidéo principal (501);
des moyens de réception de la vidéo de superposition (421) pour recevoir ladite vidéo de superposition (503); et
des moyens d'affichage vidéo (425) pour afficher ladite vidéo sur ledit affichage (307) :
en restituant ledit flux vidéo principal (501) ;
en restituant ladite première partie de ladite vidéo de superposition (503) sur ledit flux vidéo principal (501) de telle sorte que lorsque ladite vidéo s'affiche, ladite vidéo apparaît comme étant restituée sous la forme d'une vidéo unique ;
en commutant entre ladite première partie de ladite vidéo de superposition (503) et ladite seconde partie de ladite vidéo de superposition (503) tout en continuant à restituer ledit flux vidéo principal (501) et sans attendre jusqu'à ce qu'un point spécifique de la séquence vidéo principale soit atteint ; et
en restituant ladite seconde partie de ladite vidéo de superposition (503) sur ledit flux vidéo principal (501) de telle sorte que lorsque ladite vidéo s'affiche, ladite vidéo apparaît comme étant restituée sous la forme d'une vidéo unique.

11. Programme informatique comprenant des moyens de code de programme informatique conçus pour réaliser toutes les étapes de l'une quelconque des revendications 1 à 9 lorsque ledit programme est exécuté sur un ordinateur.

12. Programme informatique selon la revendication 11 incorporé à un support lisible par ordinateur.
